# EUROPEAN PATENT APPLICATION

(11) **EP 4 621 405 A1**
(43) Date of publication of application: **24.09.2025**
(21) Application number: 23891391.7
(22) Date of filing: 06.11.2023
(51) Int. Cl.: G01N 30/26

(54) **LIQUID CHROMATOGRAPH**

(30) Priority: 16.11.2022 JP 2022183060
(71) Applicant: HITACHI HIGH-TECH CORPORATION, Tokyo 105-6409 (JP)
(72) Inventor: NISHIKI Kenichiro, Tokyo 105-6409 (JP); ITO Shinya, Tokyo 105-6409 (JP)
(74) Representative: MERH-IP Matias Erny Reichl Hoffmann Patentanwälte PartG mbB
(86) International application number: PCT/JP2023/039824
(87) International publication number: WO 2024/106238

(57) **Abstract**

There is provided a liquid chromatograph for analyzing a sample using a liquid that can alleviate a drawback accompanying the installation of a liquid vessel at a high position. The liquid chromatograph according to this disclosure includes: a first vessel that accommodates a liquid; a first pump that feeds the liquid from the first vessel to a second vessel; and a second pump that supplies the liquid accommodated in the second vessel to the analysis unit, wherein the second vessel is disposed such that a bottom surface of the liquid in the second vessel is positioned above a liquid aspirating port of the second pump in a direction of gravity.

## Description

### Technical Field

The disclosure relates to a liquid chromatograph for analyzing a liquid by using a separation column.

### Background Art

The liquid chromatograph uses a solvent for separating a sample. Generally, a gravitational force is utilized to feed the solvent accommodated in a solvent bottle therefrom. Consequently, the liquid chromatograph has the solvent bottle disposed at a position higher than a liquid feed pump in the direction of gravity (example: Claim 1 disclosed in Patent Literature 1).

### Citation List

### Patent Literature

Patent Literature 1: US9000360B2

### Summary of Invention

### Technical Problem

The solvent bottle (liquid vessel) disposed at a high position causes problems including (a) a device failure caused by a spill of the solvent, (b) a concern over workability and safety upon exchange of the solvent bottle because of the need of carrying a heavy load to the high position, and (c) restriction of the device layout owing to the position of the solvent bottle.

The disclosure has been made considering the above-described problems, and it is an object of the disclosure to alleviate drawbacks caused by placement of the liquid vessel at the high position in the liquid chromatograph for analyzing a sample by using the liquid.

### Solution to Problem

The liquid chromatograph according to the disclosure includes a first vessel for accommodating a liquid, a first pump for feeding the liquid from the first vessel to a second vessel, and a second pump for supplying the liquid accommodated in the second vessel to the analysis section. The second vessel is disposed such that a bottom surface of the liquid in the second vessel is positioned higher than the position of a liquid aspirating port of the second pump in a direction of gravity.

### Advantageous Effects of Invention

According to the disclosure, it is possible to alleviate the drawbacks caused by placement of the liquid vessel at the high position in the liquid chromatograph for analyzing the sample by using the liquid. Other characteristics, advantageous effects, and configurations will be clarified with reference to the detailed description as below.

### Brief Description of Drawings

[FIG. 1] FIG. 1 is a diagram showing an overall configuration of a liquid chromatograph mass spectroscope 1 according to First Embodiment.
[FIG. 2] FIG. 2 is a side view of the liquid chromatograph mass spectroscope 1 according to Second Embodiment.

### Description of Embodiments

### <First Embodiment: Configuration of Device>

The disclosure relates to the liquid chromatograph, and is described by taking a liquid chromatograph mass spectroscope formed by connecting the liquid chromatograph to a mass spectroscope as an example in the following embodiments.

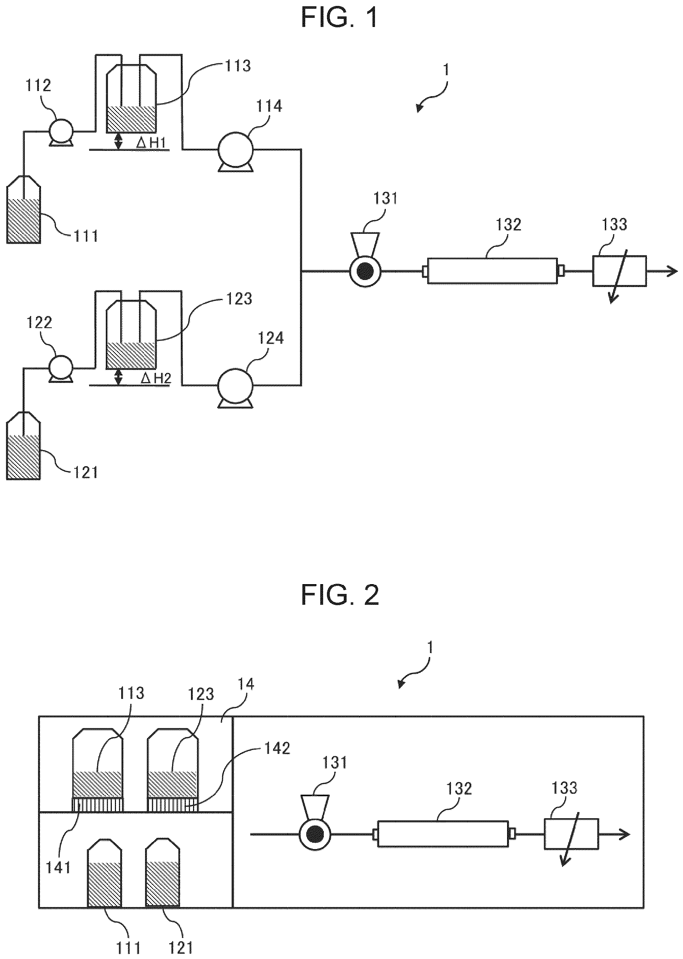

FIG. 1 is a diagram showing an overall configuration of a liquid chromatograph mass spectroscope 1 according to a first embodiment of the present invention, which is formed by connecting the liquid chromatograph to the mass spectroscope. The liquid chromatograph mass spectroscope 1 is a device for performing analysis processing such as mass spectrometry by separating a sample by the liquid chromatography, and includes a first solvent bottle 111 (first vessel), a first auxiliary pump 112 (first pump), a first reservoir 113 (second vessel), a first liquid feed pump 114 (second pump), a sample filling portion 131, a separation column 132, and a detection unit 133.

The sample filling portion 131 receives the sample and the respective solvents, and supplies them to the separation column 132. The separation column 132 performs separation processing, and the detection unit 133 performs the mass spectrometry such that the sample is analyzed.

The first solvent bottle 111 accommodates a first solvent. The first solvent bottle 111 is disposed at a position to which a user can easily get access for replenishing the first solvent bottle 111 with the first solvent or exchanging the first solvent bottle 111 itself. The first solvent bottle 111 disposed at the high position in the direction of gravity causes problems including (a) a device failure caused by a spill of the solvent, (b) a concern over workability and safety upon exchange of the solvent bottle because of the need of carrying a heavy load to the high position, and (c) restriction of the device layout owing to the position of the solvent bottle. Accordingly, it is desirable that the first solvent bottle 111 is disposed at a relatively lower position within the liquid chromatograph mass spectroscope 1.

The first reservoir 113 accommodates the first solvent to be supplied to the sample filling portion 131. The first liquid feed pump 114 adjusts the amount of the first solvent to be supplied to the sample filling portion 131. The first solvent is fed from the first reservoir 113 to the first liquid feed pump 114 under the gravitational force that acts on the first solvent. Accordingly, there is a difference in height ΔH1 in the direction of gravity between a liquid aspirating port of the first liquid feed pump 114 and the bottom surface of the first reservoir 113. The bottom surface of the first reservoir 113 is at the higher position. It is sufficient that the first liquid feed pump 114 has a function only for feeding the first solvent from the first reservoir 113 to the sample filling portion 131. Therefore, it is not necessary for the first liquid feed pump to have the function for feeding the first solvent in the reverse direction.

The first reservoir 113 is disposed at a relatively high position within the liquid chromatograph mass spectroscope 1 for the purpose of feeding the first solvent from the first reservoir 113 to the first liquid feed pump 114 under the gravitational force. As a result, the first reservoir 113 is disposed higher than the position of the first solvent bottle 111. The first auxiliary pump 112 feeds the first solvent from the first solvent bottle 111 to the first reservoir 113.

As the first solvent accommodated in the first reservoir 113 is used within the liquid chromatograph mass spectroscope 1, the user does not have to get easy access to the first reservoir 113 for replenishing the first solvent. Therefore, for example, the first reservoir 113 may be disposed on the position within the liquid chromatograph mass spectroscope 1, to which the user cannot get easy access (example: the place where it is necessary to release the sealing for access).

In the case of using a plurality of solvents for performing the liquid chromatograph mass spectroscopy, the same configurations each including the first solvent bottle 111, the first auxiliary pump 112, the first reservoir 113, and the first liquid feed pump 114 may be disposed for the respective solvents. FIG. 1 illustrates an example that a second solvent bottle 121, a second auxiliary pump 122, a second reservoir 123, and a second liquid feed pump 124 are disposed for supplying a second solvent. A distance ΔH2 in the direction of gravity between a liquid introduction port and a bottom surface of the reservoir may be either the same as or different from the distance ΔH1.

### <First Embodiment: Summary>

In the liquid chromatograph mass spectroscope 1 according to the first embodiment, the first auxiliary pump 112 feeds the first solvent from the first solvent bottle 111 to the first reservoir 113. The bottom surface of the first solvent accommodated in the first reservoir 113 is positioned higher than the liquid aspirating port of the first liquid feed pump 114 in a direction of gravity. This allows the user to easily get access to the first solvent bottle 111 while keeping the configuration to feed the first solvent to the first liquid feed pump 114 under the gravitational force. It is therefore possible to alleviate problems including (a) a device failure caused by a spill of the solvent, (b) a concern over workability and safety upon exchange of the solvent bottle because of the need of carrying a heavy load to the high position, and (c) restriction of the device layout owing to the position of the solvent bottle.

The specific background of the above-described effects will be described as below. As the first solvent bottle 111 is disposed at a relatively lower position within the liquid chromatograph mass spectroscope 1, even if the first solvent is spilled while replenishing the first solvent or exchanging the first solvent bottle 111, there is a low possibility that the first solvent is spilled over other devices and components within the liquid chromatograph mass spectroscope 1. When replenishing the solvent or exchanging the first solvent bottle, the first solvent bottle 111 does not have to be pushed up to the high position. Accordingly, the workability and safety will not suffer from deterioration. The position at which the first solvent bottle 111 is disposed is not limited to the upper position within the liquid chromatograph mass spectroscope 1. Accordingly, there is little restriction of the layout of the respective devices and components within the liquid chromatograph mass spectroscope 1. This makes it possible to attain the above-described effects.

### <Second Embodiment>

FIG. 2 is a diagram showing an overall configuration of the liquid chromatograph mass spectroscope 1 according to a second embodiment of the present disclosure, which is formed by connecting the liquid chromatograph to the mass spectroscope. The respective solvent bottles, reservoirs, an analysis section from the sample filling portion 131 onward are accommodated in a casing of the liquid chromatograph mass spectroscope 1. The first solvent bottle 111 and the second solvent bottle 121 are accommodated in relatively lower positions of the space, and the first reservoir 113 and the second reservoir 123 are accommodated in relatively higher positions of the space. The space for accommodating the respective reservoirs is referred to as an accommodating unit 14.

For example, the accommodating unit 14 is composed of a shelf and a drawer, and sealed by a sealing member such as a screw. Therefore, the user is not allowed to get easy access to the respective reservoirs accommodated in the accommodating unit 14. Only when a worker opens the accommodating unit 14 by unscrewing for the periodical maintenance work, for example, the user can get access to the respective reservoirs in the accommodating unit 14.

The liquid chromatograph mass spectroscope 1 may be provided with a weight sensor for controlling the timing at which the reservoir is replenished with the solvent from the solvent bottle. Referring to FIG. 2, a weight sensor 141 measures the weight of the first reservoir 113, and a weight sensor 142 measures the weight of the second reservoir 123. The weight of the first reservoir 113, which is less than a threshold represents that the amount of the first solvent in the first reservoir 113 becomes small. When the weight of the first reservoir 113 is less than the threshold, the first auxiliary pump 112 supplies the first solvent from the first solvent bottle 111 to the first reservoir 113. When the weight of the second reservoir 123, which has been measured by the weight sensor 142 is less than the threshold, the similar operations will be performed. This makes it possible to automate the operation for replenishing the reservoir with the solvent from the solvent bottle. The operation of the auxiliary pump may be controlled by a suitable controller. The auxiliary pump itself may be configured to control its own operations.

### <Modification of the Disclosure>

It should be noted that the present disclosure is not limited to the embodiments described above, and includes various modifications. For example, the embodiments described above have been described in detail to simply describe the present disclosure, and are not necessarily required to include all the described configurations. In addition, part of the configuration of one embodiment can be replaced with the configurations of other embodiments. In addition, the configuration of the one embodiment can also be added with the configurations of other embodiments. In addition, part of the configuration of each of the embodiments can be subjected to addition, deletion, and replacement with respect to other configurations.

As the configuration of the embodiment is exemplified by the liquid chromatograph that uses two types of solvents (first solvent and second solvent), which are accommodated in the accommodating unit 14. The number of solvent types is not limited to the number as described above. The disclosure is applicable to the case using solvents of the arbitrary number of types.

### List of Reference Signs

1: liquid chromatograph mass spectroscope
111: first solvent bottle
112: first auxiliary pump
113: first reservoir
114: first liquid feed pump
131: sample filling portion
132:separation column
133: detecting unit

## Claims

1. A liquid chromatograph for analyzing a sample, the liquid chromatograph comprising:
a first vessel configured to accommodate a liquid used for separating the sample;
a first pump configured to feed the liquid from the first vessel to a second vessel; and
a second pump configured to take out the liquid accommodated in the second vessel from the second vessel, wherein
the second vessel is disposed such that a bottom surface of the liquid in the second vessel is positioned higher than the position of a liquid aspirating port of the second pump in a direction of gravity.

2. The liquid chromatograph according to claim 1, wherein
the second vessel is positioned at which the liquid in the second vessel is fed from the second vessel to the second pump due to gravity that acts on the liquid in the second vessel.

3. The liquid chromatograph according to claim 1, wherein
the first vessel is at least configured to allow a user to exchange the first vessel or to allow the user to replenish the liquid.

4. The liquid chromatograph according to claim 1, wherein
the first vessel is disposed lower than the position of the second vessel in a direction of gravity.

5. The liquid chromatograph according to claim 1, wherein
the second vessel is disposed at a position at which a user is not allowed to directly get access to the second vessel.

6. The liquid chromatograph according to claim 5, wherein
the second vessel is disposed in an accommodating unit that the liquid chromatograph includes, and
the accommodating unit is sealed by a sealing member so as to prevent a user from directly getting access to the accommodating unit.

7. The liquid chromatograph according to claim 1, further comprising
a sensor configured to measure a weight of the second vessel that accommodates the liquid, wherein
the first pump is configured to feed the liquid from the first vessel to the second vessel in a state where the weight is less than a threshold.
